**Europäisches Patentamt**

**European Patent Office**

**Office européen des brevets**

(11) Publication number: **0 075 857**
**B1**

(12) **EUROPEAN PATENT SPECIFICATION**

(45) Date of publication of patent specification: **20.11.86**

(21) Application number: **82108777.2**

(22) Date of filing: **22.09.82**

(51) Int. Cl.⁴: **C 04 B 35/58**

(54) Sintered bodies of aluminum nitride.

(30) Priority: **28.09.81 JP 152141/81**

(43) Date of publication of application:
**06.04.83 Bulletin 83/14**

(45) Publication of the grant of the patent:
**20.11.86 Bulletin 86/47**

(84) Designated Contracting States:
**DE FR GB NL SE**

(56) References cited:
**GB-A-1 230 823**
**GB-A-2 023 185**
**US-A-3 833 389**

**CHEMICAL ABSTRACTS, vol. 83, no. 18,
November 1975, page 269, no. 151373p,
Columbus, Ohio, USA**

**MATERIALS SCIENCE RESEARCH, vol. 13,
1980, pages 321-332, S. PROCHAZKA et al.:
"Sintering of aluminum nitride"**

(73) Proprietor: **Kabushiki Kaisha Toshiba
72, Horikawa-cho Saiwai-ku
Kawasaki-shi Kanagawa-ken 210 (JP)**

(72) Inventor: **Komeya, Katsutoshi
2-2-14, Ishigamidai Oiso-machi
Naka-gun Kanagawa-ken (JP)**
Inventor: **Tsuge, Akihiko
6-1-47-101, Konandai Konan-ku
Yokohama-shi Kanagawa-ken (JP)**
Inventor: **Inoue, Hiroshi
1086-5, Koyaba Kawaguchi-shi
Saitama-ken (JP)**

(74) Representative: **Hansen, Bernd, Dr.rer.nat. et al
Hoffmann, Eitle & Partner Patentanwälte
Arabellastrasse 4
D-8000 München 81 (DE)**

Courier Press, Leamington Spa, England.

## Description

This invention relates to sintered bodies of aluminum nitride, more particularly, sintered bodies of aluminum nitride which have high density and are excellent in various properties for practical use.

Sintered bodies of aluminum nitride (AlN) have the properties essential to high-temperature materials, such as heat resistance, corrosion resistance or high-temperature impact resistance, and also have a high thermal conductivity.

It is required that sintered bodies of AlN have a high density in order to allow them to exhibit these various properties. For this reason, many efforts have hitherto been made to establish the technique for preparing sintered bodies of AlN having high density.

Such sintered bodies of AlN are usually obtained by molding AlN powder, followed by sintering. However, in the process in which AlN powder is used alone, high dense sintered bodies can not be obtained due to poor sinterability thereof, and the density of the sintered bodies is considerably low, i.e., at most 82% of the absolute density.

Therefore a method of sintering under pressure in which a hot pressing is employed has been tried but satisfactory results have not been obtained. Moreover, a method has been tried in which rare earth elements' oxides such as yttrium oxides ($Y_2O_3$), lanthanum oxides ($La_2O_3$) or the like are added to AlN powder as sintering aids to obtain sintered bodies of considerably high density.

However, this method has disadvantages in that it has difficulties in view of cost, due to the expensiveness of rare earth oxides, and that conductivity of AlN—$Y_2O_3$ series sintered bodies is lowered so that a high thermal conductivity inherent to AlN can not be maintained and exhibited.

There is disclosed in Japanese Provisional Patent Publication No. 23411/1975, a process for preparing sintered bodies of AlN in which calcium oxide (CaO), barium oxide (BaO), strontium oxide (SrO) or the like is added as a sintering aid. It was found that these sintering aids are effective additives for imparting to the sintered bodies characteristics inherent to AlN since a small amount of such a sintering aid forms a liquid phase at a high temperature, which is advantageous for the densification of sintered bodies of AlN.

However AlN powder, which is the main starting material for sintered bodies of AlN, is liable to contain oxygen or oxides, which are unavoidably incorporated at the time of its preparation, and whereby a harmful effect on maintaining the excellent properties of sintered bodies of AlN is caused.

Namely, oxygen is liable to dissolve in AlN powder to form a solid solution so that it often exists not only on the surface of AlN powder but also within the inner part of the powder. Moreover, oxygen may also be incorporated in the form of $Al_2O_3$ during the preparation of AlN. Accordingly, when sintering of AlN powder is carried out at high temperature, oxygen remains kept in the state of a solid solution or is converted, the compound having, for example, 'spinel type structure' defined by the formula $(AlN)_x(Al_2O_3)_y$ (wherein x and y individually represent a given natural number) and so on, resulting in impairing the excellent properties such as high thermal conductivity and the like, which are inherent to AlN. Therefore, in the conventional sintered bodies of AlN or the process for preparing thereof, above-mentioned problems have not been solved at all.

An object of this invention is to eliminate the problems of the prior art and provide a sintered bodies of aluminum nitride which have high density and are excellent in various properties for practical use, such as thermal conductivity.

The invention comprises a sintered body of aluminum nitride obtained by sintering a body of a powder mixture containing (a) 100 parts by weight of aluminum nitride powder and (b) 0.05 to 6 parts by weight (calculated in terms of calciumoxide, barium oxide, strontium oxide or mixture thereof) of a powder of at least one compound selected from calcium oxide, barium oxide, strontium oxide and a compound capable of being converted into one of these oxides by sintering, and is characterized in that the powder mixture contains additionally (c) more than 0 to not more than 7 parts by weight (calculated in terms of carbon) of carbon powder or powder of a compound capable of being converted into carbon by sintering, said amount of added carbon powder being sufficient to substantially remove all of oxygen in the aluminum nitride powder to provide a sintered body having a thermal conductivity of at least 62.8 W/m · K.

The aluminum nitride powder (a) is a product prepared industrially by the usual method and contains such impurities as oxygen, non-stoichiometrical oxides of aluminum or aluminum oxides ($Al_2O_3$) which are unavoidable during the preparation of AlN powder. Generally, in the case where the concentration of oxygen in AlN powder exceeds 5%, it becomes difficult to remove all oxygen present in such high concentration, even if the above-mentioned (c) i.e., carbon or a compound capable o. being converted into carbon by sintering is added in a large amount corresponding to that of oxygen. Accordingly, the concentration of oxygen contained in the above-mentioned aluminum nitride powder (a) should preferably be not more than 5% and, more preferably, not more than 3%.

The AlN powder has preferably a particle diameter of not more than 5 μm and, more preferably, not more than 2 μm.

The compound (b), which is calcium oxide, barium oxide, strontium oxide or a compound capable of being converted into one of these oxides by sintering, functions as sintering promoter of the sintered bodies. The amount of powder (b) to be formulated in the above-mentioned mixed powder is 0.05 to 6 parts by weight and more preferably be 0.05 to 4 parts by weight based on 100 parts by weight of the AlN powder, being calculated in terms of CaO, BaO, SrO or a mixture thereof. When the content of these oxides is less than 0.05 part by weight, condensation of the sintered body is insufficient, and if the content exceeds 6 parts by weight, the thermal conductivity of the sintered body deteriorates while condensation is sufficient.

As the compound (b), which is capable of being converted into an oxide selected from calcium oxide, barium oxide and strontium oxide, there may be mentioned, for example, calcium carbonate, barium carbonate, strontium carbonate, calcium nitrate, barium nitrate, strontium nitrate, calcium hydroxide, barium hydroxide, strontium hydroxide, calcium oxalate, barium oxalate and strontium oxalate. The particle diameter of compound (b), is preferably in the range of 0.01 to 2 μm and, more preferably 0.1 to 1 μm.

In the compound (b) other compounds, for example, oxides of titanium (Ti) and zirconium (Zr), may contaminate the sintered bodies in the range between 0 and 2% by weight based on the oxides of Ca, Ba and Sr.

The compound (c) contributes to inhibit the formation of a compound having spinel type structure, reduces and eliminates oxygen in the AlN starting material, and results in the formation of an AlN sintered body having excellent characteristics such as high density and high thermal conductivity. The amount of the above-mentioned carbon powder or powder of a compound capable of being converted into carbon by sintering, which is to be blended in the above-mentioned mixed powder, is in the range of more than 0 to not more than 7 parts by weight based on 100 parts by weight of the aluminum nitride powder (a), being calculated in terms of the amount of carbon per se, and more preferably in the range of 0.5 to 5 parts by weight. The amount of the carbon depends upon the amount of oxygen present in the AlN powder and to be substantially removed. When the carbon content exceeds 7 parts by weight, carbon is left unremoved so that it impairs various properties of AlN for practical use, such as sinterability and thermal conductivity.

The carbon powder (c) includes graphite and carbon black and the powdery substance capable of being converted into carbon upon by sintering includes for example sugar, a phenol resin and a styrene resin. While the particle diameter of these powders is not particularly critical, it may preferably be in the range of 0.01 to 0.5 μm in view of handling thereof.

The powder mixture of (a), (b) and (c) may generally contain a binder (a molding aid) such as paraffin, stearic acid or polyvinyl alcohol in addition to components (a) to (c).

The sintered body of aluminum nitride is obtainable by the following method. Such a method may comprise molding a mixed powder containing above-mentioned predetermined amount of

(a) powder of aluminum nitride,

(b) powder of at least one compound selected from calcium oxide, barium oxide, strontium oxide or a compound capable of being converted into one of these oxides by sintering, and

(c) powder of carbon or powder of a compound capable of being converted into carbon by sintering followed by sintering the thus molded powder.

The above-mentioned mixed powder is molded by applying suitable molding pressure, for example 29.4 to 196 N/mm² (0.3 to 2 ton/cm²), at an ordinary temperature and the thus obtained molded body, is heated to evaporate the binder, if necessary. In cases where a powder of a substance capable of being converted into carbon by sintering is employed as the powder (c), or powder of a compound capable of being converted into one oxide selected from calcium oxide, barium oxide, and strontium oxide by sintering is employed as the powder (b), the mixed powder is further heated followed by sintering the thus obtained molded bodies. An atmosphere for sintering may preferably be a non-oxidative one containing nitrogen gas (N₂) (a mixed gas of N₂—argon gas (Ar), N₂—hydrogen gas (H₂), or N₂—carbon monoxide (CO) and sintering temperature is generally in the range of 1600 to 2000°C. preferably in the range of 1700 to 1850°C., ordinary for about 0.5 to 5 hours.

Moreover, the sintered material may be subjected to treatment by hot isostatic pressing (HIP) for higher densification and it is also possible to apply hot pressing in the sintering step.

The sintered bodies of AlN of this invention have a high density, are excellent in various properties for practical use, such as mechanical property and thermal property, and are industrially extremely advantageous.


Example 1

Under a pressure of 196 · N/mm² (2 ton/cm²), a mixed powder containing 97 parts by weight of AlN powder having an average particle diameter of 1.2 μm, 1.5 parts by weight of carbon powder having an average particle diameter of not more than 0.1 μm, 1.5 parts by weight of CaCO₃ powder having an average particle diameter of 0.3 μm and 5 parts by weight of paraffin as a binder was molded, to obtain a plate-like molded body (30 mm×30 mm×20 mm).

The thus obtained molded body was preheated at a temperature of up to 400°C. in a N₂ atmosphere, put into an AlN crucible, being packed with AlN powder as a padding material therearound, and sintered to a sintered body at a temperature of 1800°C. in a N₂ atmosphere for 30 minutes.


Comparative Example 1

A sintered body was obtained from the same material and in the same manner as in Example 1 except that no carbon powder was added.

# 0 075 857

A relative density relative to a true density and thermal conductivity of the thus obtained sintered bodies in Example 1 and Comparative Example 1 were measured. The results are shown in Table 1.

TABLE 1

|  | Relative density (%) | Thermal conductivity (W/m · K) |
|---|---|---|
| Example 1 | 98.5 | 62.8 |
| Comparative Example 1 | 98.4 | 41.9 |

As apparently seen from Table 1, it is confirmed that the sintered body of AlN of this invention has a thermal conductivity around 50% higher than that of the comparative sintered body to which no carbon powder was blended.

Examples 2 to 9

Mixed powders containing AlN powder, carbon powder and $CaCO_3$ powder (the average particle diameters of which are 1.2 µm, not more than 0.1 µm and 0.5 µm, respectively) being incorporated with paraffin as a binder, and having the compositions shown in Table 2 were each molded and sintered in the same manner as in Example 1 to obtain sintered bodies. Sintering was carried out for 60 minutes in a stream of $N_2$ having a flow rate of 3 l/min. In Examples 7 to 9, sintering temperatures were varied so as to be 1750 to 1850°C., respectively.

Relative density and thermal conductivity of the sintered bodies of AlN thus prepared of this invention were measured. The results are shown in Table 2.

Comparative Examples 2 to 4

A sintered bodies were obtained from the same material and were each molded and sintered in the same manner as in Example 1 except that the compositions were varied.

Three kinds of sintered bodies of AlN thus prepared were tested for relative density and thermal conductivity in the same manner as in Examples. The results are shown in Table 2 together with their compositions.

4

TABLE 2

| | Composition (parts by weight) | | | | Sintering condition | | Relative density (%) | Thermal conductivity (W/m · K) |
|---|---|---|---|---|---|---|---|---|
| | AlN | C | CaCO$_3$ | Paraffin | Temperature (°C) | Period of time (min) | | |
| Example 2 | 98.8 | 1 | 0.2 | 5 | 1800 | 60 | 98.5 | 71.2 |
| " 3 | 97.5 | 2 | 0.5 | " | " | " | 99.3 | 67.0 |
| " 4 | 97 | 2 | 1 | " | " | " | 99.0 | 67.0 |
| " 5 | 95 | 3 | 2 | " | " | " | 98.5 | 62.8 |
| " 6 | 97 | 3 | 4 | " | " | " | 98.5 | 62.8 |
| " 7 | 96 | 2 | 2 | " | 1780 | " | 98.5 | 71.2 |
| " 8 | 96 | 2 | 2 | " | 1750 | " | 98.0 | 71.2 |
| " 9 | 98.8 | 1 | 0.2 | " | 1850 | " | 99.5 | 67.0 |
| Comparative Example 2 | 99 | 0 | 1 | " | 1800 | " | 99.0 | 50.2 |
| " 3 | 98 | 2 | 0 | " | " | " | 82.5 | — |
| " 4 | 90 | 2 | 8 | " | " | " | 97.2 | 41.9 |

0 075 857

As apparently seen from Table 2, it is confirmed that the sintered bodies having excellent thermal conductivity were obtained when the aluminum nitride-carbon-calcium oxide series having predetermined compositions of the starting material are used.

Example 10

A sintered body was obtained in the same manner as in Example 1, by using, as a starting material, a mixed powder consisting of 96 parts by weight of AlN powder having an average particle diameter of 1.2 μm, 2 parts by weight of carbon powder having an average particle diameter of not more than 0.1 μm, 2 parts by weight of $BaCO_3$ powder having an average particle diameter of 0.5 μm and 5 parts by weight of paraffin as a binder. It was confirmed that the thus obtained sintered body had a high relative density of 98.9% and also a high thermal conductivity of 67.0 W/m · K.

Example 11

A sintered body was obtained in the same manner as in Example 1, by using, as a starting material, a mixed powder consisting of 96.5 parts by weight of AlN powder having an average particle diameter of 1.2 μm, 1.5 parts by weight of carbon powder having an average particle diameter of not more than 0.1 μm, 2 parts by weight of $SrCO_3$ powder having an average particle diameter of 0.5 μm and 5 parts by weight of paraffin as a binder. The thus obtained sintered body had a high relative density of 98.9% and also a high thermal density of 62.8 W/m · K.

Example 12

Under a pressure of 196 N/mm², a mixed powder consisting of 96 parts by weight of AlN powder having an average particle diameter of 1.2 μm, 2 parts by weight of carbon powder having an average particle diameter of not more than 0.1 μm, 2 parts by weight (calculated in terms of BaO) of $Ba(NO_3)_2$ having an average particle diameter of 1.4 μm and 5 parts by weight of paraffin as a binder was molded, to obtain a disk-like molded body (30 mm φ×10 mm). After the thus obtained molded body was preheated at a temperature up to 400°C, in a stream of $N_2$, it was put into an AlN crucible, being packed with AlN powder as a padding material therearound, and was sintered at 1800°C. in a $N_2$ atmosphere for 30 minutes. The thus obtained sintered body had a high density of 98.2% and also a high thermal conductivity of 62.8 W/m · K.

Example 13

A sintered body was obtained in the same manner as in Example 1, by using, as a starting material, a mixed powder consisting of 96 parts by weight of AlN powder having an average particle diameter of 1.8 μm, 2 parts by weight of carbon powder having an average particle diameter of 0.1 μm, 1 part by weight (calculated in terms of CaO) of $CaCO_3$ powder having an average particle diameter of 1.0 μm, 1 part by weight of $Al_2O_3$ powder and 5 parts by weight of paraffine as a binder. The thus obtained sintered body had a relative density of 98.8% and also a high thermal conductivity of 62.8 W/m · K.

Examples 14 and 15

Sintered bodies obtained in Examples 1 and 10 were subjected to treatment of hot isostatic pressing (HIP) at a temperature of 1750°C. under a pressure of 1013 bar for one hour. As the result, shown in Table 3, the densities and thermal conductivities of these sintered bodies were found to have been improved.

TABLE 3

| | HIP treated sintered body | Relative density (%) | | Thermal conductivity (W/m · K) | |
|---|---|---|---|---|---|
| | | before treating | after treating | before treating | after treating |
| Example 14 | Example 1 | 98.5 | >99 | 62.8 | 71.2 |
| Example 15 | Example 10 | 98.9 | >99 | 62.8 | 71.2 |

Claims

1. A sintered body of aluminum nitride obtained by sintering a body of a powder mixture containing
   (a) 100 parts by weight of aluminum nitride powder and
   (b) 0.05 to 6 parts by weight (calculated in terms of calcium oxide, barium oxide, strontium oxide or mixture thereof) of a powder of at least one compound selected from calcium oxide, barium oxide, strontium oxide and a compound capable of being converted into one of these oxides by sintering, characterized in that the powder mixture contains additionally

(c) more than 0 to not more than 7 parts by weight (calculated in terms of carbon) of carbon powder or powder of a compound capable of being converted into carbon by sintering, said amount of added carbon powder being sufficient to substantially remove all of oxygen in the aluminum nitride powder to provide a sintered body having a thermal conductivity of at least 62.8 W/m · K.

2. A sintered body of aluminum nitride according to Claim 1, wherein the compounding amount of the ingredient (b) is in the range between 0.05 and 4 parts by weight.

3. A sintered body of aluminum nitride according to Claim 1 or 2, wherein the compounding amount of the ingredient (c) is in the range between 0.1 and 5 parts by weight.

**Patentansprüche**

1. Sinterkörper aus Aluminiumnitrid, erhalten durch Sintern eines Körpers aus einer Pulvermischung, enthaltend

(a) 100 Gew.-Teile Aluminiumnitridpulver und

(b) 0,05 bis 6 Gew.-Teile (berechnet als Calciumoxid, Bariumoxid, Stronthiumoxid oder Mischungen davon) eines Pulvers aus wenigstens einer Verbindung, ausgewählt aus Calciumoxid, Bariumoxid, Stronthiumoxid, und einer Verbindung, die in der Lage ist, in eines dieser Oxide durch Sintern umgewandelt zu werden, dadurch gekennzeichnet, dass die Pulvermischung zusätzlich

(c) mehr als 0 bis nicht mehr als 7 Gew.-Teile (berechnet als Kohlenstoff) eines Kohlenstoffpulvers oder eines Pulvers einer Verbindung, die durch Sintern in Kohlenstoff umgewandelt werden kann, enthält, wobei die Menge des zugegebenen Kohlenstoffpulvers ausreicht, um im wesentlichen allen Sauerstoff in dem Aluminiumnitridpulver zu entfernen und dem Sinterkörper eine Wärmeleitfähigkeit von wenigstens 62,8 W/m · K verleiht.

2. Sinterkörper aus Aluminiumnitrid gemäss Anspruch 1, dadurch gekennzeichnet, dass die zugegebene Menge des Bestandteils (b) im Bereich zwischen 0,05 und 4 Gew.-Teilen liegt.

3. Sinterkörper aus Aluminiumnitrid gemäss Ansprüchen 1 oder 2, dadurch gekennzeichnet, dass die zugegebene Menge des Bestandteils (c) im Bereich von 0,1 bis 5 Gew.-Teilen liegt.

**Revendications**

1. Corps fritté en nitrure d'aluminium obtenu par frittage d'un corps d'un mélange de poudre contenant

(a) 100 parties en poids de poudre de nitrure d'aluminium et

(b) 0,05 à 6 parties en poids, (calculées par rapport à l'oxyde de calcium, l'oxyde de baryum, l'oxyde de strontium ou leur mélange) d'une poudre d'au moins un composé choisi parmi l'oxyde de calcium, l'oxyde de baryum, l'oxyde de strontium et un composé capable d'être transformé en un de ces oxydes par frittage, caractérisé en ce que le mélange de poudre contient en plus

(c) plus de 0 et pas plus de 7 parties en poids (calculées par rapport au carbone) de poudre de carbone ou de poudre d'un composé capable d'être transformé en carbone par frittage, ladite quantité de poudre de carbone ajoutée étant suffisante pour pratiquement éliminer tout l'oxygène dans la poudre de nitrure d'aluminium pour fournir un corps fritté ayant une conductivité thermique d'au moins 62,8 W/m · K.

2. Corps fritté en nitrure d'aluminium selon la revendication 1, caractérisé en ce que la quantité de mélange de l'ingrédient (b) est comprise dans l'intervalle allant de 0,05 à 4 parties en poids.

3. Corps fritté en nitrure d'aluminium selon la revendication 1 ou 2, caractérisé en ce que la quantité de mélange de l'ingrédient (c) est comprise dans l'intervalle allant de 0,1 à 5 parties en poids.